# EUROPÄISCHE PATENTSCHRIFT

(11) **EP 0 598 339 B1**
(45) Veröffentlichungstag und Bekanntmachung des Hinweises auf die Patenterteilung: **22.05.1996**
(21) Anmeldenummer: 93118287.7
(22) Anmeldetag: 11.11.1993
(51) Int. Cl.: C04B 18/02, C08J 5/06

(54) **Acrylfasern mit verbesserter Dispergierbarkeit in viskosen Matrizes, und Verfahren zur Herstellung von faserverstärkten Verbunden**
Acrylic fibres with an improved dispersibility in viscous matrixes, and method of making fibre reinforced composites
Fibres acryliques ayant une dispersabilité améliorée dans les matrices visqueuses, et méthode pour produire des composites armés

(30) Priorität: 17.11.1992 DE 4238667
(43) Veröffentlichungstag der Anmeldung: 25.05.1994
(73) Patentinhaber: HOECHST AKTIENGESELLSCHAFT, D-65929 Frankfurt am Main (DE)
(72) Erfinder: Neuert, Richard, Dr., D-90610 Winkelhaid (DE); Stein, Gerhard, D-65579 Kelheim (DE); Schuster, Ulrich, D-93051 Regensburg (DE)

(56) Entgegenhaltungen:
- EP-A- 0 235 577
- DE-A- 3 605 326
- CHEMICAL ABSTRACTS, vol. 111, no. 10, 4. September 1989, Columbus, Ohio, US; abstract no. 83148p, M. OKADA ET AL 'Method for dispersing reinforcing fibers' Seite 237 ;
- DATABASE WPI Week 8419, Derwent Publications Ltd., London, GB; AN 84-116878 & JP-A-61 017 950 (NIKKEI KAKO KK) 21. September 1982
- DATABASE WPI Section Ch, Week 9231, Derwent Publications Ltd., London, GB; Class A13, AN 92-250521 KOKTA ET AL & CA-A-2 029 726 (D.C. MALDAS) 13. November 1990

## Beschreibung

Die vorliegende Erfindung betrifft neue Faserbündel auf der Basis von Acrylfasern, sowie ein Verfahren zur Herstellung Von faserverstärkten Verbunden.

Es ist bekannt, daß beim Einmischen synthetischer Kurzfasern in viskose Matizes, wie in Beton- oder Mörtel, Probleme auftreten. In Abwesenheit spezieller Maßnahmen bilden sich üblicherweise sogenannte "Batzen" oder "Igel" aus, d.h. die Faserbündel lösen sich nicht oder nicht genügend auf und verbleiben in der Matrix und somit im später daraus hergestellten Verbundwerkstoff. Die nicht aufgelösten Faserbündel sind im allgemeinen nicht erwünscht, da daraus Schwachstellen im Verbundwerkstoff resultieren.

Es sind bereits verschiedene Wege beschritten worden, um die Auflösung von Faserbündeln beim Einmischen in solche Matrizes zu verbessern. So lassen sich besondere Mischaggregate einsetzen; diese Lösung ist häufig mit hohem apparativem und zeitlichem Aufwand verbunden und dementsprechend kostenintensiv.

Es ist auch bereits bekannt, die Faserbündel mit einem Klebmittel zu beaufschlagen, welches vor dem Einmischen einen Zusammenhalt des Bündels bewirkt und beim Einmischen unter Zuhilfenahme üblicher Mischaggregate eine Auflösung der Bündel gestattet. So werden in der EP-A-235,577 Acrylfaserbündel beschrieben, die ein solches Eigenschaftprofil aufweisen. Diese Faserbündel snid dadurch gekennzeichnet, daß Fasern mit Durchmessern von weniger als 50 µm und Längen von mehr als 3 mm zum Einsatz kommen, die mit einem Klebmittel versehen wurden. Zum Verkleben der Fasern werden Mittel eingesetzt, die in Wasser löslich oder quellbar sind, beispielsweise Carboxy-Methylcellulose, oder die in organischen Lösungsmitteln löslich sind, beispielsweise Polyurethan-Harze.

Weiterhin ist es aus DE-A-36 05 326 bekannt, mit organopolysiloxan beschichtete Acrylfasern als verstärkende Füllstoffe zu verwenden.

Es wurde jetzt überraschenderweise gefunden, daß die Behandlung von kurzgeschnittenen Acrylfasern mit ausgewählten Mitteln zu Faserbündeln führt, und daß diese Faserbündel sich besonders gut in viskose Matrices einmischen und in Einzelfasern vereinzeln lassen.

Die vorliegende Erfindung betrifft ein Faserbündel umfassend Stapelfasern aus Acrylnitrilpolymeren, das mit einem den Zusammenhalt des Faserbündels bewirkenden Mittel versehen ist, und das sich beim Einmischen in viskose Matrixmaterialien in seine Einzelfasern auflöst. Das erfindungsgemäße Faserbündel ist dadurch gekennzeichnet, daß es mit einem wasserlöslichen Alkalisilikat und/oder mit einem Organosilan-Haftvermittler behandelt ist.

Bei den erfindungsgemäß einzusetzenden Acrylfasern kann es sich um Fasern aus beliebigen Acrylnitrilpolymeren handeln. So können diesen Fasern aus Acrylnitril bestehen, das mindestens 40 Mol. %, bezogen auf das Polymere, wiederkehrende Acrylnitrileinheiten aufweist und das im übrigen wiederkehrende Struktureinheiten aufweist, die sich von mit Acrylnitril copolymerisierbaren Monomeren, wie Acryl- oder Methacrylsäurederivaten oder α-Olefinen, ableiten.

Vorzugsweise bestehen die Acrylnitrilpolymeren aus mindestens 85 Mol %, bezogen auf das Polymere, an wiederkehrenden Acrylnitrileinheiten.

Die erfindungsgemäß zu verwendenden Acrylfasern weisen üblicherweise eine Stapellänge von 2 bis 24 mm, vorzugsweise von 6 bis 12 mm auf.

Ihr Einzelfasertiter beträgt üblicherweise 1,0 bis 100 dtex, vorzugsweise 1,5 bis 50 dtex.

Der Faserquerschnitt der erfindungsgemäß zu verwendenden Acrylfasern kann beliebig sein, beispielsweise dreieckig, tri- oder multilobal oder insbesondere rund.

Bei den erfindungsgemäß zu verwendenen Acrylfasern handelt es sich üblicherweise um hochfeste Typen. Solche Fasern weisen im allgemeinen eine Höchstzugkraft (gemessen nach DIN 53816) von mehr als 20 cN/tex, vorzugsweise von 35 bis 90 cN/tex auf. In Abhängigkeit vom Titer können auch höhere Höchstzugkraftwerte auftreten.

Besonders bevorzugt setzt man hochfeste und hochmodulige Acrylfasertypen ein; beispielsweise Fasern mit einer Festigkeit von 50 bis 90 cN/tex und einem Anfangsmodul (gemessen nach DIN 53816), bezogen auf 100 % Dehnung, von mehr als 10000 N/mm² vorzugsweise mehr als 15000 N/mm².

Solche Fasertypen weisen vorzugsweise Höchstzugkraftdehnungen (gemessen nach DIN 53816) von 4 bis 30 %, insbesondere von 5 bis 11 % auf.

Das den Zusammenhalt des Faserbündels bewirkende Mittel wird in einer Menge auf die Fasern aufgebracht, so daß der gewünschte Effekt erzielt wird. Typische Mengen dieses Mittels liegen im Bereich von 0,1 bis 5,0 Gew.%, vorzugsweise 0,3 bis 3,0 Gew.%, bezogen auf das Faserbündel. Besonders bevorzugt setzt man 0,7 bis 1,5 Gew.% des Mittels ein.

Bei dem erfindungsgemäß einzusetzenden Mittel handelt es sich um wasserlösliches Alkalisilikat und/oder um Organosilan-Haftvermittler. Beide Typen von Klebmitteln sind an sich bekannt und beispielsweise in Ullmanns Encyclopädie der technischen Chemie, 4. neubearbeitete und erweiterte Auflage, Band 21, S. 409-414 und S. 496-500, Verlag Chemie (1980), beschrieben.

Als wasserlösliches Alkalisilikat setzt man besonders bevorzugt ein Natriumsilikat ein, das üblicherweise 2 bis 4 Mol SiO₂ auf 1 Mol Alkalioxid aufweist.

Als Organosilan-Haftvermittler setzt man bevorzugt eine Verbindung der Formel I ein

X-(CH₂)ₙ-Si-(Y)₃ (I),

worin n eine ganze Zahl von 1 bis 5, insbesondere 3 bedeutet, X ein Gruppe der Formel -COOR¹, -CN, -(CH₂)ₘ-NR²R³ oder Halogen ist, Y Alkyl, Alkoxy oder Halogen bedeutet, R¹, R² und R³ unabhängig voneinander Wasserstoff, Alkyl, Cycloalkyl, Aryl oder Aralkyl bedeuten und m eine ganze Zahl von 0 bis 5, insbesondere 2 bedeutet.

Bedeuten irgendwelche Gruppen Alkyl, so kann es sich dabei um verzweigte oder insbesondere um geradkettige Alkylreste handeln. Beispiele dafür sind Alkylreste mit 1 bis 6 Kohlenstoffatomen, wie Methyl, Ethyl, n-Propyl, n-Butyl, an Pentyl oder n-Hexyl.

Bedeuten irgendwelche Gruppen Alkoxy, so kann es sich dabei um verzweigte oder insbesondere um geradkettige Alkoxyreste handeln. Beispiele dafür sind Alkoxyreste mit 1 bis 6 Kohlenstoffatomen, wie Methoxy, Ethoxy, n-Propoxy, n-Butoxy, n-Pentoxy oder n-Hexoxy.

Bedeuten irgendwelche Gruppen Cycloalkyl, so handelt es sich dabei im allgemeinen um Reste mit fünf bis acht Ringkohlenstoffatomen, insbesondere um Cyclohexyl.

Bedeuten irgendwelche Gruppen Aryl, so handelt es sich dabei im allgemeinen um ein- oder mehrkernige carbocyclisch-aromatische Reste, die kondensiert oder anelliert sein können, insbesondere um Phenyl.

Bedeuten irgendwelche Gruppen Aralkyl, so handelt es sich dabei üblicherweise um Reste mit sieben bis neun Kohlenstoffatomen, insbesondere um Benzyl. Bedeuten irgenwelche Reste Halogen, so kann es sich um Fluor, Chlor, Brom oder Iod handeln; bevorzugt wird Chlor.

Besonders bevorzugt behandelt man Acrylfasern mit Organosilan-Haftvermittlern der oben definierten Formel I, worin X eine Gruppe der Formel -(CH₂)ₘ-NR²R³ ist, worin R² und R³ unabhängig voneinander Wasserstoff oder C₁-C₆Alkyl bedeuten, Y C₁-C₆Alkyl oder insbesondere C₁-C₆Alkoxy bedeuten und m 0 oder 2 ist.

Die erfindungsgemäßen Faserbündel werden vorzugsweise zur Herstellung von Verbundwerkstoffen eingesetzt. Das Verfahren zur Herstellung dieser Verbundwerkstoffe umfasst die Schritte
a) Vorlegen eines viskosen Matrixmaterials in trockener oder feuchter Form in einem Mischaggregat,
b) Zufügen einer wirksamen Menge eines Verstärkungsmaterials in Form von Faserbündeln nach Anspruch 1, und
c) Einmischen besagten Verstärkungsmaterials in besagtes feinteiliges Matrixmaterial, so daß sich die Faserbündel im wesentlichen in die Einzelfasern auflösen.

Gegenstand der Erfindung ist das oben definierte Verfahren sowie die Verwendung der Faserbündel zur Herstellung von Verbundwerkstoffen.

Die erfindungsgemäßen Faserbündel können in Mischung mit anorganischen und/oder organischen viskosen Matrixmaterialien eingesetzt werden.

Unter dem Begriff "viskoses Matrixmaterial" sind im Rahmen der Beschreibung solche Materialien zu verstehen, deren Viskosität so hoch ist, daß bei der Verwendung üblicher Kurzschnittfasern und bei der Verwendung konventioneller Mischaggregate mit einer beträchtlichen Batzenbildung in der Mischung zu rechnen ist.

Beispiele für organische Matrixmaterialien sind viskose Kunststoffe, also erhitzte Thermoplaste oder Duroplaste, in die die erfindungsgemäßen Faserbündel eingemischt und möglichst gleichmäßig verteilt werden sollen.

Beispiele für anorganische Matrixmaterialien sind an der Luft und/oder durch Wasser abbindende Mischungen anorganischer Materialien; insbesondere hydraulisch abbindende Materialien. Die erfindungsgemäßen Faserbündel werden bevorzugt in Mischung mit Mörtel, Beton, Zement, Gips oder organischen Versiegelungsmitteln - also in Baustoffmitteln im weitesten Sinne - eingesetzt.

Das Einmischen der erfindungsgemäßen Faserbündel in das Matrixmaterial kann mit konventionellen Mischaggregaten erfolgen. Beispiele dafür sind praxisübliche Zwangs-, Pflugschar- und andere derartige Mischer.

Das Matrixmaterial kann feinteilig, wie in Form von Granulat, von Pulver oder von Staub, sowie als viskose Schmelze vorliegen. Vorzugsweise liegt es als feinteiliges anorganisches Material vor. Das Einmischen der Faserbündel in feinteiliges anorganisches Material kann in trockenem oder in feuchtem Zustand erfolgen.

Die folgenden Beispiele erläutern die Erfindung ohne sie zu begrenzen.

In zahlreichen Versuchen wurden beschriebene, durch Präparieren gebündelte Kurzfasern in diverse Mörtel- und Beton-Matrizes gemischt. Es wurden hochfeste und hochmodulige Acrylfasern eingesetzt, die mit etwa 0,5 bis 1 Gew. % N-Aminoethyl-3-aminopropyl-trimethoxysilan bzw. mit 0,8 bis 5 Gew. % Natronwasserglas präpariert worden waren. Die Faserbündel ließen sich in handelsüblichen Zwangsbaumischern ohne Probleme homogen einmischen. Die Fasern wurden dabei in abgewogenen Mengen aus der Verpackung auf die komplette, vorgemischte Matrix eingeschüttet.

Faserverstärkte Fertigteile wurden u.a. unter UV-Licht auf homogene Faserverteilung in der Matrix geprüft. Eine gleichmäßige Verteilung war gewährleistet. Die Biegezugfestigkeit und das Arbeitsaufnahmevermögen werden erhöht; die Rißneigung und die Rißverbreiterung werden vermindert.

## Patentansprüche

1. Faserbündel umfassend Stapelfasern aus Acrylnitrilpolymeren, das mit einem den Zusammenhalt des Faserbündels bewirkenden Mittel versehen ist, und das sich beim Einmischen in viskose Matrixmaterialien in seine Einzelfasern auflöst, dadurch gekennzeichnet, daß es sich bei dem Mittel um ein wasserlösliches Alkalisilikat und/oder um einen Organosilan-Haftvermittler handelt.

2. Faserbündel gemäß Anspruch 1, dadurch gekennzeichnet, daß die Acrylfasern eine Stapellänge von 6 bis 12 mm aufweisen und einen Einzelfasertiter von 1,5 bis 50 dtex besitzen.

3. Faserbündel gemäß Anspruch 1, dadurch gekennzeichnet, daß die Acrylfasern eine Höchstzugkraft von 35 bis 90 cN/tex, einen Modul von mehr als 15000 N/mm² und eine Höchstzugkraftdehnung von 5 - 11 % aufweisen.

4. Faserbündel gemäß Anspruch 1, dadurch gekennzeichnet, daß es sich bei dem wasserlöslichen Alkalisilikat um ein Natriumsilikat handelt, das 2 bis 4 Mol SiO₂ auf 1 Mol Alkalioxid aufweist.

5. Faserbündel gemäß Anspruch 1, dadurch gekennzeichnet, daß es sich bei dem Organosilan-Haftvermittler um eine Verbindung der Formel I handelt
X-(CH₂)ₙ-Si-(Y)₃ (I),
worin n eine ganze Zahl von 1 bis 5, insbesondere 3 bedeutet, X ein Gruppe der Formel -COOR¹, -CN, -(CH₂)ₘ-NR²R³ oder Halogen ist, Y Alkyl, Alkoxy oder Halogen bedeutet, R¹, R² und R³ unabhängig voneinander Wasserstoff, Alkyl, Cycloalkyl, Aryl oder Aralkyl bedeuten und m eine ganze Zahl von 0 bis 5, insbesondere 2 bedeutet.

6. Faserbündel gemäß Anspruch 5, dadurch gekennzeichnet, daß X eine Gruppe der Formel -(CH₂)ₘ-NR²R³ ist, worin R² und R³ unabhängig voneinander Wasserstoff oder C₁-C₆Alkyl bedeuten, Y C₁-C₆Alkyl oder insbesondere C₁-C₆Alkoxy bedeuten und m 0 oder 2 ist.

7. Faserbündel gemäß Anspruch 1, dadurch gekennzeichnet, daß das den Zusammenhalt des Faserbündels bewirkenden Mittel in einer Menge von 0,3 bis 3,0 Gew.%, bezogen auf das Faserbündel, vorliegt.

8. Verfahren zur Herstellung von Verbundwerkstoffen umfassend die Schritte
a) Vorlegen eines viskosen Matrixmaterials in trockener oder feuchter Form in einem Mischaggregat,
b) Zufügen einer wirksamen Menge eines Verstärkungsmaterials in Form von Faserbündeln nach Anspruch 1, und
c) Einmischen besagten Verstärkungsmaterials in besagtes feinteiliges Matrixmaterial, so daß sich die Faserbündel im wesentlichen in die Einzelfasern auflösen.

9. Verwendung von Faserbündeln nach Anspruch 1 zur Herstellung von Verbundwerkstoffen.

## Claims

1. A fiber bundle comprising staple fibers of acrylonitrile polymers which is provided with an agent that causes the fiber bundle to hold together and which separates into its individual fibers on mixing into viscous matrix materials, wherein the agent is a water-soluble alkali metal silicate and/or an organosilane adhesion promoter.

2. The fiber bundle of claim 1, wherein the acrylic fibers have a staple length of from 6 to 12 mm and a fiber linear density of from 1.5 to 50 dtex.

3. The fiber bundle of claim 1, wherein the acrylic fibers have a tenacity of from 35 to 90 cN/tex, a modulus of more than 15,000 N/mm² and a breaking extension of 5-11%.

4. The fiber bundle of claim 1, wherein the water-soluble alkali metal silicate is a sodium silicate containing from 2 to 4 mol of SiO₂ per mole of alkali metal oxide.

5. The fiber bundle of claim 1, wherein the organosilane adhesion promoter is a compound of the formula I
X-(CH₂)ₙ-Si-(Y)₃ (I)
where n is an integer from 1 to 5, in particular 3, X is a group of the formula -COOR¹, -CN, -(CH₂)ₘ-NR²R³ or halogen, Y is alkyl, alkoxy or halogen, R¹, R² and R³ are independently of each other hydrogen, alkyl, cycloalkyl, aryl or aralkyl, and m is an integer from 0 to 5, in particular 2.

6. The fiber bundle of claim 5, wherein X is a group of the formula - (CH₂)ₘ-NR²R³ where R² and R³ are independently of each other hydrogen or C₁-C₆alkyl, Y is C₁-C₆alkyl or in particular C₂-C₆alkoxy, and m is 0 or 2.

7. The fiber bundle of claim 1, wherein the agent causing the fiber bundle to hold together is present in an amount of from 0.3 to 3.0% by weight, based on the fiber bundle.

8. A process for producing composite materials, comprising the steps of
a) introducing a viscous matrix material in a dry or moist state into a mixing apparatus as the initial charge,
b) adding an effective amount of a reinforcing material in the form of fiber bundles as claimed in claim 1, and
c) mixing said reinforcing material into said finely divided matrix material so that the fiber bundles are essentially separated into the individual fibers.

9. The use of fiber bundles as claimed in claim 1 for producing composite materials.

## Revendications

1. Faisceau de fibres comportant des fibres coupées en polymères de l'acrylonitrile, qui sont pourvues d'un produit assurant la cohésion du faisceau de fibres, et qui, lors d'une incorporation par mélange dans des matériaux de matrice visqueux, se séparent en ses fibres individuelles, caractérisé en ce que, pour ce qui est du produit, il s'agit d'un silicate de métal alcalin soluble dans l'eau et/ou d'un promoteur d'adhérence de type organosilane.

2. Faisceau de fibres selon la revendication 1, caractérisé en ce que les fibres acryliques ont une longueur coupée de 6 à 12 mm et un titre de fibre individuelle de 1,5 à 50 dtex.

3. Faisceau de fibres selon la revendication 1, caractérisé en ce que les fibres acryliques ont une résistance maximale à la traction de 35 à 90 cN/tex, un module d'élasticité supérieur à 15 000 N/mm² et un allongement sous l'effet de la force maximale de traction de 5 à 11 %.

4. Faisceau de fibres selon la revendication 1, caractérisé en ce que, pour ce qui est du silicate de métal alcalin soluble dans l'eau, il s'agit d'un silicate de sodium, qui contient de 2 à 4 moles de SiO₂ par mole d'oxyde de métal alcalin.

5. Faisceau de fibres selon la revendication 1, caractérisé en ce que, pour ce qui est du promoteur d'adhérence de type organosilane, il s'agit d'un composé de formule (I)
X-(CH₂)ₙ-Si(Y)₃ (I)
dans laquelle n est un nombre entier de 1 à 5 et vaut en particulier 3, X est un groupe de formule -COOR¹, -CN, -(CH₂)ₘ-NR²R³ ou halogéno, Y est un groupe alkyle, alcoxy ou halogéno, R¹, R² et R³, indépendamment les uns des autres, sont chacun un hydrogène ou un groupe alkyle, cycloalkyle, aryle ou aralkyle, et m est un nombre entier de 0 à 5, et vaut en particulier 2.

6. Faisceau de fibres selon la revendication 5, caractérisé en ce que X est un groupe de formule -(CH₂)ₘ-NR²R³, où R² et R³, indépendamment l'un de l'autre, sont chacun un hydrogène ou un groupe alkyle en C₁-C₆, Y est un groupe alkyle en C₁-C₆ ou en particulier alcoxy en C₁-C₆, et m vaut 0 ou 2.

7. Faisceau de fibres selon la revendication 1, caractérisé en ce que le produit assurant la cohésion du faisceau de fibres est présent en une quantité de 0,3 à 3,0 % en poids par rapport au faisceau de fibres.

8. Procédé pour fabriquer des matériaux composites, qui comprend les étapes suivantes :
a) mise en place dans un équipement mélangeur d'un matériau de matrice visqueux, sous forme sèche ou humide,
b) addition d'une quantité efficace d'un matériau de renforcement sous forme de faisceaux de fibres selon la revendication 1, et
c) incorporation, par mélange, dudit matériau de renforcement dans ledit matériau de matrice finement divisé, de façon que les faisceaux de fibres se séparent essentiellement en les fibres individuelles.

9. Utilisation de faisceaux de fibres selon la revendication 1 pour fabriquer des matériaux composites.
